# EUROPÄISCHE PATENTSCHRIFT

(11) **EP 3 691 939 B1**
(45) Veröffentlichungstag und Bekanntmachung des Hinweises auf die Patenterteilung: **01.02.2023**
(21) Anmeldenummer: 18786241.2
(22) Anmeldetag: 02.10.2018
(51) Int. Cl.: B60T 7/12, B60T 13/66, B60T 17/22, F16D 66/00

(54) **VERFAHREN UND BREMSENSTEUERUNG ZUM BETÄTIGEN EINER REIBUNGSBREMSE**
BRAKE METHOD AND BRAKE CONTROL DEVICE TO OPERATE A FRICTION BRAKE
PROCEDE DE FREINAGE À FRICTION ET APPAREIL DE FREINAGE A FRICTION

(30) Priorität: 05.10.2017 AT 508532017
(43) Veröffentlichungstag der Anmeldung: 12.08.2020
(73) Patentinhaber: VE Vienna Engineering Forschungs- und Entwicklungs GmbH, 1010 Wien (AT)
(72) Erfinder: PUTZ, Michael, 8272 Sebersdorf (AT)
(74) Vertreter: Patentanwälte Pinter & Weiss OG
(86) Internationale Anmeldenummer: PCT/EP2018/076775
(87) Internationale Veröffentlichungsnummer: WO 2019/068701

(56) Entgegenhaltungen:
- EP-A1- 3 251 908
- EP-A2- 1 762 746
- EP-A2- 2 211 071
- EP-A2- 2 927 068
- WO-A1-02/22417
- WO-A1-2006/085047
- WO-A2-2014/170259
- DE-A1-102011 016 126
- DE-A1-102016 120 418

## Beschreibung

Die gegenständliche Erfindung betrifft ein Verfahren zum Betätigen einer Reibungsbremse, wobei für einen Bremsvorgang ein an einer Andrückeinrichtung der Reibungsbremse angeordneter Bremsbelag gegen eine Reibfläche der Reibungsbremse gepresst wird und die Andrückeinrichtung für den Bremsvorgang von einem Betätigungsmittel der Reibungsbremse angetriebenen wird, wobei für einen Bremsvorgang zur Erzielung eines vorgegebenen Wirkungsmaßes der Reibungsbremse, wobei das Wirkungsmaß ein Maß für die Bremswirkung ist, der Bremsbelag der Reibungsbremse aus einer Anfangsposition unter Überwindung eines Luftspalts zur Reibfläche der Reibungsbremse zugestellt wird und der Bremsbelag ab einem Kontaktpunkt zwischen Bremsbelag und Reibfläche gegen die Reibfläche gepresst wird, indem ein zum vorgegebenen Wirkungsmaß zugehöriges Betätigungsmaß der Reibungsbremse ermittelt und über die Andrückeinrichtung und das Betätigungsmittel eingestellt wird. Ferner betrifft die Erfindung eine Bremsensteuerung zum Durchführen des Verfahrens.

Eine Reibungsbremse erzeugt zum Bremsen durch Anpressen eines Bremsbelages gegen eine Reibfläche ein vorgegebenes Bremsmoment, bzw. analog eine Bremsanpresskraft, allgemein eine bestimmte Bremswirkung. Über das bekannte Weg-Kraftverhalten der Reibungsbremse zur Bremsbetätigung kann die Bremswirkung z.B. einem Betätigungsweg (beispielswiese einem Betätigungswinkel), zugeordnet werden, der zurückgelegt werden muss, um die gewünschte Bremswirkung hervorzurufen. Da Bremsmoment gleich Reibkraft mal bekanntem Reibradius ist und Reibkraft gleich Bremsanpresskraft mal bekanntem Reibbeiwert ist, kann jeder dieser Werte äquivalent als Bremswirkung interpretiert werden. Elektrisch betätigte Reibungsbremsen verwenden einen Elektromotor, um die Reibungsbremse zu betätigen. Der Elektromotor, eventuell über ein Zwischengetriebe oder Übertragungsteile wie Nocken, Exzenter, Hebel, Stangen, Keilen, Verdrehung von Kugelrampen, Schrauben, Wälzkörper in Gewindegängen (z.B. Kugelspindeln), Flüssigkeiten, Gase, etc., treibt dabei eine Andrückeinrichtung an, die den Betätigungsweg zurücklegt, um den Bremsbelag gegen die Reibfläche zu pressen, um die gewünschte Bremswirkung zu erzielen. Beispiele von Reibungsbremsen können der EP 2 433 025 B1 oder der WO 2014/139919 A1 entnommen werden.

Um die Reibungsbremse zu regeln, um also eine gewünschte Bremswirkung auf geordnete Weise einzustellen, muss entweder die Bremswirkung (Bremsmoment, Reibkraft, Bremsanpresskraft) oder äquivalent der Betätigungsweg, oder auch beides, geregelt werden, was in der Regel in einer elektronisch geregelten Reibungsbremse mittels einer Bremsenregeleinheit, z.B. mit einem PID-Regler, erfolgt.

Die Regelung der Reibungsbremse über den Betätigungsweg ist einfach, aber dafür unzuverlässig, da damit nicht sicher auf das Erreichen einer benötigten Bremswirkung rückgeschlossen werden kann. Z.B. bleibt dabei der Einfluss des Verschleißes der Bremsbeläge oder der sich ändernden Steifigkeiten der Reibungsbremse bei unterschiedlichen Temperaturen unberücksichtigt und es ist nicht sicher gestellt, dass bei Erreichen der vorgegebenen Sollposition auch tatsächlich die angestrebte Bremswirkung erzielt wird. Die Regelung über die Bremswirkung erfordert hingegen eine Messung oder Schätzung einer aktuellen Bremswirkung, um diese in einer Rückkoppelung der Regelung als Ist-Bremswirkung zur Verfügung zu stellen. Die Messung einer Bremskraft oder eines Bremsmoments als Bremswirkung ist vor allem bei elektrisch betätigten Bremsen schwierig und aufwendig, wie bereits in der WO 2014/170259 A2 ausgeführt wird. Da eine Reibungsbremse eine sicherheitskritische Einrichtung einer Maschine oder eines Fahrzeugs ist, muss eine hohe funktionale Sicherheit sichergestellt werden, was oftmals eine redundante Ausführung von Mess- und Steuereinheiten notwendig macht. Auch das kann eine herkömmliche Messung einer Bremswirkung aufwendig und teuer, und daher in der Praxis für viele Anwendungen untauglich oder nicht praktikabel, machen.

Aus der DE 10 2011 004 772 A1 geht ein Verfahren zum Einstellen der von einer Feststellbremse ausgeübten Klemmkraft in einem Fahrzeug hervor, bei dem der Zuspannvorgang zum Erzeugen der Klemmkraft soweit durchgeführt wird, bis die dabei erzeugte mechanische Klemmarbeit einen Schwellenwert erreicht. Es wird also die Betätigungsenergie bewertet und solange zugespannt, bis ein Schwellwert erreicht wurde. Das ist eine zwar einfache aber sehr ungenaue Bremsbetätigung, die für eine Feststellbremse ausreichend ist, für eine Betriebsbremse, insbesondere eines Fahrzeuges, aber sicherlich ungeeignet ist, da es dabei auf die genaue und schnelle Erreichung einer Soll-Bremswirkung ankommt, insbesondere in Zusammenhang mit Brems- und Stabilitätssystemen (wie z.B. ABS, ESR, usw.) in modernen Fahrzeugen. Ein ungewolltes Übersteuern der Bremse, also eine ungewollte zu hohe Bremswirkung, kann zum unerwünschten und gefährlichen Blockieren des Fahrzeugrades führen, und ein ungewolltes Untersteuern, also eine ungewollte zu niedrige Bremswirkung, würde zum Nichterreichen der benötigten Bremswirkung führen.

In der WO 2014/170259 A2 wird daher vorgeschlagen, die Bremsbetätigung einer elektrischen Reibungsbremse über die Betätigungsenergie zu steuern. Dabei wird eine gewünschte Bremswirkung in eine Soll-Position der Reibungsbremse umgerechnet, die von der Bremse angefahren wird. Zu dieser Soll-Position kann aus bekannten Daten zur Reibungsbremse eine zugehörige Soll-Betätigungsenergie ermittelt werden. Während der Betätigung wird die Betätigungsenergie ermittelt und die ermittelte Ist-Betätigungsenergie mit der Soll-Betätigungsenergie verglichen, wobei eine allfällige Abweichung ausgeglichen wird. Die WO 2014/170259 A2 führt auch aus, dass dabei auch lebensdauer- oder temperaturbedingte Verluste in der Betätigung berücksichtigt werden können, beispielsweise indem die Verluste bei der Ermittlung der Betätigungsenergie kompensiert werden. Auch die über die Temperatur der Reibungsbremse veränderliche Steifigkeit kann in der Betätigungsenergie berücksichtigt werden.

Für eine sehr genaue und schnelle Einstellung der gewünschten Bremswirkung ist aber auch dieses Verfahren nur bedingt geeignet. Das Verfahren fundiert vielmehr darauf, dass die Abweichung zur gewünschten Bremswirkung nach dem eigentlichen Bremsvorgang nachträglich ausgeglichen wird. Die Anforderungen an die Exaktheit, sowie schnellen Regelbarkeit der eingestellten Bremswirkung einer elektrisch betätigten Reibungsbremse steigen aber laufend. Ein Beispiel hierfür ist die Betriebsbremse eines Hybridfahrzeugs oder Elektrofahrzeugs. Moderne Hybrid- oder Elektrofahrzeuge nutzen die Bewegungsenergie des Fahrzeugs beim Bremsen zur Energierückgewinnung. Hierfür wird der Elektromotor beim Bremsen als elektrischer Generator genutzt, wodurch eine Bremswirkung auf das Fahrzeug hervorgerufen wird. Diese ist aber abhängig von der Geschwindigkeit des Fahrzeugs bzw. von der Drehzahl des Generators. Je langsamer das Fahrzeug, umso weniger Bremswirkung kann damit erzielt werden und umso mehr Bremswirkung muss aus der Betriebsbremse hinzukommen. Das erfordert eine sehr genaue Regelung der Bremswirkung der Betriebsbremse, um einen ausgewogenen Bremsvorgang erzielen zu können. Ein anderes Beispiel sind natürlich moderne Brems- und Stabilitätssysteme in Fahrzeugen, die eine sehr genaue und schnelle Einstellung der Bremswirkung erfordern.

Es ist daher eine Aufgabe der gegenständlichen Erfindung, ein Verfahren zur Betätigung einer Reibungsbremse anzugeben, mit dem eine gewünschte Bremswirkung sehr genau und schnell eingestellt werden kann.

Um die Genauigkeit zu erhöhen ist insbesondere vorgesehen, anhand eines thermischen Modells der Reibungsbremse die thermische Ausdehnung der Reibungsbremse und daraus die temperaturabhängige Verschiebung des Kontaktpunktes für den Bremsvorgang zu ermitteln und die temperaturabhängige Verschiebung des Kontaktpunktes bei der Ermittlung des einzustellenden Betätigungsmaßes der Reibungsbremse zu berücksichtigen. Damit kann erreicht werden, dass die Abweichung zwischen der gewünschten Bremswirkung und der beim Bremsvorgang tatsächlich erreichten Bremswirkung nicht zu groß wird und damit nachträglich, wenn überhaupt, nur mehr eine geringe Abweichung ausgeglichen werden muss. Damit kann die gewünschte Bremswirkung auch schneller eingestellt werden.

Besonders einfach wird das einzustellende Betätigungsmaß in Abhängigkeit von der Verschiebung des Kontaktpunktes erhöht oder erniedrigt.

Ganz besonders vorteilhaft wird das Wirkungsmaß am Ende des Bremsvorganges ermittelt und für die Ermittlung des Wirkungsmaßes die kinetische Energie der Andrückeinrichtung und/oder des Betätigungsmittels, oder Teilen davon, für den Betätigungsvorgang zumindest teilweise berücksichtigt. Auf diese Weise kann der Einfluss der kinetischen Energie der Bremsbetätigung berücksichtigt werden, was zu einer genaueren Ermittlung des Wirkungsmaßes am Ende der Bremsbetätigung führt und damit zu einem genaueren Ausgleich der Abweichung zwischen der gewünschten Bremswirkung und der beim Bremsvorgang tatsächlich erreichten Bremswirkung. Auf diese Weise wird der Bremsvorgang genauer und schneller. In gleicher Weise kann auch die zur Überwindung des Luftspalts benötigte kinetische Energie der Andrückeinrichtung und/oder des Betätigungsmittels, oder Teilen davon, bei der Ermittlung des Wirkungsmaßes berücksichtigt wird. Damit kann die Genauigkeit noch weiter erhöht werden. Dabei kann zur weiteren Steigerung der Genuigkeit auch die temperaturabhängige Verschiebung des Kontaktpunktes bei der Ermittlung der zur Überwindung des Luftspalts benötigten kinetischen Energie berücksichtigt werden.

Die Berücksichtigung weiterer Effekte bei einem Bremsvorgang kann ebenfalls zur Erhöhung der Genauigkeit beitragen. Beispielsweise kann während des Bremsvorganges zumindest zeitweise eine Feder auf die Andrückeinrichtung und/oder das Betätigungsmittel wirken und die Wirkung der Feder bei der Ermittlung des Wirkungsmaßes berücksichtigt werden. Oder es kann während des Bremsvorganges zumindest Selbstverstärkung der Reibungsbremse wirken und die Wirkung der Selbstverstärkung bei der Ermittlung des Wirkungsmaßes berücksichtigt werden. Oder es kann ein ermitteltes Wirkungsmaß und/oder Betätigungsmaß mit einem vorgegebenen Korrekturfaktor korrigiert werden, um verbleibende Ungenauigkeiten zu reduzieren.

In einer weiteren vorteilhaften Ausgestaltung wird mit dem thermischen Modell die sich aufgrund geänderter Temperaturen ändernde Steifigkeit der Reibungsbremse, oder Teilen davon, ermittelt und die sich ändernde Steifigkeit bei der Betätigung der Reibungsbremse berücksichtigt. Auch die Berücksichtigung dieses Einflusses auf den Bremsvorgang kann die Genauigkeit des Bremsvorganges erhöhen.

Um den Verschleißnachsteller nicht laufend betätigen zu müssen, kann nach der Bremsung der Luftspalt nur nachgestellt werden, wenn die Abweichung zwischen dem gewünschten Wirkungsmaß und dem tatsächlich ermittelten Wirkungsmaß einen vorgegebenen Schwellwert überschreitet. Dazu kann aus der Abweichung ein Nachstellmaß abgeleitet werden, mit dem Luftspalt mit einem Verschleißnachsteller und/oder der Andrückeinrichtung nachgestellt wird.

Die gegenständliche Erfindung wird nachfolgend unter Bezugnahme auf die Figuren 1 bis 7 näher erläutert, die beispielhaft, schematisch und nicht einschränkend vorteilhafte Ausgestaltungen der Erfindung zeigen. Dabei zeigt
Fig.1 eine schematische Darstellung einer Schwimmsattel-Scheibenbremse mit Bremsbetätigung als Beispiel einer Reibungsbremse,
Fig.2 den Verlauf des Betätigungsmoments T_{A} und des Bremsmoments T_{B} in Abhängigkeit vom Betätigungswinkel α,
Fig.3 den Betätigungswinkelbereich am Beispiel einer exzentrisch betätigten Reibungsbremse,
Fig.4 eine Wirkungsmaß-Betätigungsmaß Kennlinie mit einem Bremsvorgang,
Fig.5 die Abweichung in der Wirkungsmaß-Betätigungsmaß Kennlinie aufgrund des thermischen Zustands der Reibungsbremse,
Fig.6 die Abweichung in der Wirkungsmaß-Betätigungsmaß Kennlinie aufgrund einer ungenauen Ermittlung des Wirkungsmaßes und
Fig.7 eine erfindungsgemäße Bremsensteuerung.

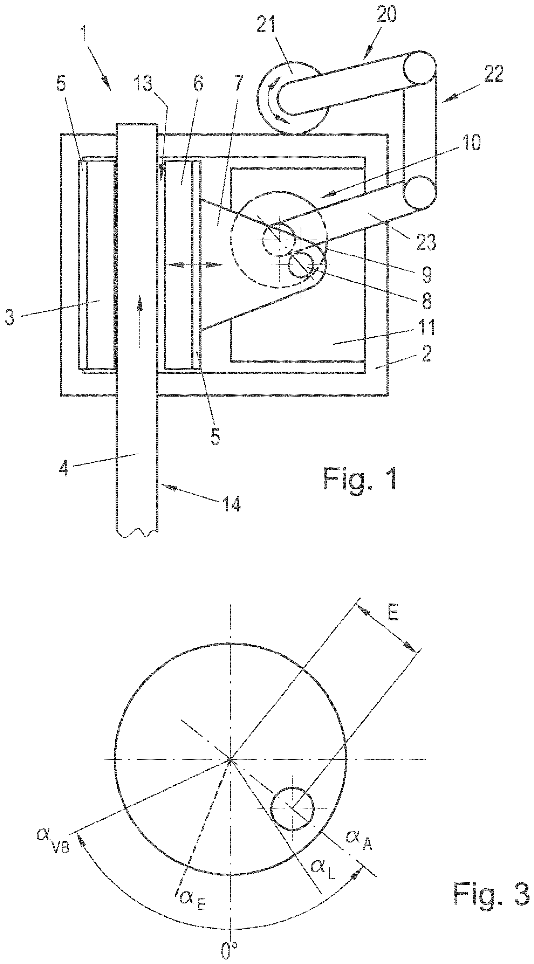

Die Erfindung wird nachfolgend anhand Fig.1 beispielhaft anhand einer schematisch dargestellten Reibungsbremse 1 in Form einer Schwimmsattel-Scheibenbremse, wie sie häufig in Fahrzeugen verwendet wird, näher erläutert. Schwimmsattel-Scheibenbremsen sind an sich hinlänglich bekannt, weshalb nur so weit auf die Eigenschaften und Funktion einer Schwimmsattel-Scheibenbremse und auf den grundsätzlichen Einbau einer Schwimmsattel-Scheibenbremse, z.B. in einem Fahrzeug, eingegangen wird, so weit es für das Verständnis der Erfindung erforderlich ist. Die Erfindung kann aber grundsätzlich auch auf andere Bremsentypen, wie z.B. eine Trommelbremse, angewendet werden. Ebenso kann auch eine andere Reibfläche als eine Bremsscheibe oder eine Bremstrommel vorgesehen sein, beispielsweise eine mehr oder weniger ebene Fläche, z.B. als Bremse für eine Linearbewegung, beispielsweise für einen Aufzug.

Fig.1 zeigt eine Reibungsbremse 1 mit einem Schwimmsattel 2 als Bremssattel, der eine Reibfläche 14, hier in Form einer Bremsscheibe 4, umgibt. Am Schwimmsattel 2 ist ein feststehender (bezogen auf den Schwimmsattel 2) Bremsbelag 3 und ein beweglicher (ebenfalls bezogen auf den Schwimmsattel 2) Bremsbelag 6 angeordnet. Der bewegliche Bremsbelag 6 wird zum Bremsen durch eine Andrückeinrichtung 10 mit einem Betätigungsteil, nach Überwindung eines üblicherweise vorhandenen Luftspalts 13, gegen die Bremsscheibe 4 gedrückt, wie durch den Doppelpfeil in Fig.1 angedeutet. Die Andrückeinrichtung 10, bzw. der Betätigungsteil, wird dabei von einem Betätigungsmittel 20, beispielsweise einen Elektromotor 21, angetrieben. Im nicht betätigten Zustand der Reibungsbremse 1 wird der bewegliche Bremsbelag 6 üblicherweise und vorzugsweise soweit zurückgezogen, bis dieser von der Bremsscheibe 4 abhebt, um allfällige unerwünschte Verluste durch ein verbleibendes Restbremsmoment zu verhindern. Dabei sollte natürlich auch der feststehende Bremsbelag 3 von der Reibfläche 14 abgehoben werden. Durch die Betätigung der Reibungsbremse 1 zentriert sich der Schwimmsattel 2 in bekannter Weise selbsttätig, sodass beide Bremsbeläge 3, 6 an der Bremsscheibe 4 anliegen und gegen diese gedrückt werden. Dadurch entsteht die Bremsanpresskraft, die ein bestimmtes Bremsmoment hervorruft. Der Bremsbelag 3, 6 kann dabei auch jeweils auf einem Belagsträger 5 angeordnet sein.

Die Andrückeinrichtung 10 ist an einem Bremsenteil angeordnet. Der Bremsenteil kann der Schwimmsattel 2 sein, kann aber auch, wie hier, ein an sich bekannter Verschleißnachsteller 11 sein. Dabei ist der Verschleißnachsteller 11 in der dargestellten Ausführung der Reibungsbremse 1 am Schwimmsattel 2 angeordnet und die Andrückeinrichtung 10 wiederum am Verschleißnachsteller 11. Die gesamte Andrückeinrichtung 10 wird dabei vom Verschleißnachsteller 11 zum Ausgleich eines entstehenden Verschleißes an den Bremsbelägen 3, 6 bewegt. Die Andrückeinrichtung 10 oder der bewegliche Bremsbelag 6 kann dabei bevorzugt in der Reibungsbremse 1, z.B. wie hier im Schwimmsattel 2, geführt sein. Da der Verschleißnachsteller 11 nur sehr geringe Wege und diese nur von Zeit zu Zeit verstellen muss, ist die Andrückeinrichtung 10 quasi ortsfest in der Reibungsbremse 1 angeordnet. Ein solcher Verschleißnachsteller 11 ist an sich in verschiedensten Ausführungen bekannt, weshalb hier nicht näher darauf eingegangen wird. Der Verschleißnachsteller 11 wird üblicherweise nur bei übermäßigem Luftspalt 13 zwischen Bremsbelag 3, 6 und Reibfläche 14 zur Nachführung benutzt (ähnlich wie bei Trommelbremsen), um den Luftspalt 13 zu verringern. Im normalen Betrieb der Reibungsbremse 1 vergrößert sich der Luftspalt 13 durch Verschleiß laufend, was durch den Verschleißnachsteller 11 wieder ausgeglichen werden kann.

Die Andrückeinrichtung 10 umfasst hier einen Halteteil 7, an dem der Bremsbelag 6 bzw. der Belagsträger 5 anliegt. Im Halteteil 7 ist eine Andrückwelle 8 beidseitig gelagert. Die Andrückwelle 8 ist als Wellenzapfen einer Betätigungswelle 9 ausgeführt, oder ist in einer als Hohlwelle ausgeführten Betätigungswelle 9 gelagert, wobei die Wellenzapfen oder die axiale Bohrung der Betätigungswelle 9 exzentrisch zur Drehachse der Betätigungswelle 9 ausgeführt ist. Die Betätigungswelle 9, die an einem ortsfesten, bzw. quasi-ortsfesten, Bremsenteil, hier der Verschleißnachsteller 11, gelagert ist, wird durch das Betätigungsmittel 20 verdreht, sodass die Andrückwelle 8, und damit auch der Bremsbelag 6, durch die Exzentrizität, je nach Drehrichtung, zur Bremsscheibe 4 hin, oder von dieser weg, bewegt wird (angedeutet durch den Doppelpfeil). Die Bremsanpresskräfte werden hier somit über einen Exzenter erzeugt. Ebenso könnte die Andrückeinrichtung 10 in Form einer Nocke, die am Belagsträger 5 oder an einem Halteteil 7 angreift, oder in Form eines Kniehebels ausgeführt sein. Auch mehrstufige Getriebe oder Kugelspindeln kommen als Andrückeinrichtung 10 in Frage. Gemeinsam ist allen Ausführungsformen das Betätigungsmittel 20, das einen Betätigungsteil der Andrückeinrichtung 10, z.B. eine Betätigungswelle 9 mit exzentrisch gelagerter Andrückwelle 8, eine Nocke, eine Kugelspindel, ein Hebel, usw., zur Betätigung der Reibungsbremse 1 um einen Betätigungsweg bewegt, beispielsweise um einen Winkel verdreht oder um eine Distanz verschiebt. Der Betätigungsweg bewirkt dann die Bewegung des Bremsbelags 6 in Richtung zur Reibfläche 14, oder von dieser weg. Mögliche Ausführungen der Andrückeinrichtung 10 können beispielsweise der WO 2010/133463 A1 oder der AT 513 989 A1 entnommen werden, wobei die Erfindung natürlich nicht auf diese Ausführungen beschränkt ist.

Als Betätigungsmittel 20 ist im Ausführungsbeispiel der Fig.1 ein Elektromotor 21 vorgesehen, der in der dargestellten Ausgestaltung über ein Gestänge 22 einen an der Betätigungswelle 9 angeordneten Betätigungshebel 23, und damit die Betätigungswelle 9, verdreht. Selbstverständlich könnte auch jeder andere geeignete Antrieb als Betätigungsmittel 20 in Frage kommen, so z.B. ein Elektromotor, der die Betätigungswelle 9 direkt oder über ein Getriebe antreibt. Das Betätigungsmittel 20 könnte aber auch eine Feder umfassen, die, zumindest teilweise, zusätzlich zum Elektromotor 21 wirkt. Die Feder könnte auch zum Betätigen der Bremse und der Elektromotor 21 zum Lösen und zum gelöst Halten der Bremse verwendet werden. Diese Ausführung kommt insbesondere dann zur Anwendung, wenn die Reibungsbremse 1 im energielosen Zustand sicher betätigt sein muss, wie beispielsweise bei Eisenbahnbremsen, einer Betriebsbremse einer Maschine oder eines Aufzugs. In diesem Fall betätigt die Feder die Reibungsbremse 1, wenn der Elektromotor 21 aufgrund eines Ausfalls der Versorgungsenergie nicht mehr gelöst halten kann.

Die Andrückeinrichtung 10 hat einen gewissen, festgelegten Arbeitsbereich, in Form eines Betätigungswegbereiches des Betätigungsteils, z.B. der Verdrehweg der Betätigungswelle 9 oder der Verschiebeweg einer Kugelspindel. Der Arbeitsbereich wird dabei vorteilhaft so gewählt, dass sich günstige Übersetzungsverhältnisse zur Erzeugung der Bremsanpresskräfte ergeben, also beispielsweise hohe Kräfte bei kleinen Wegen.

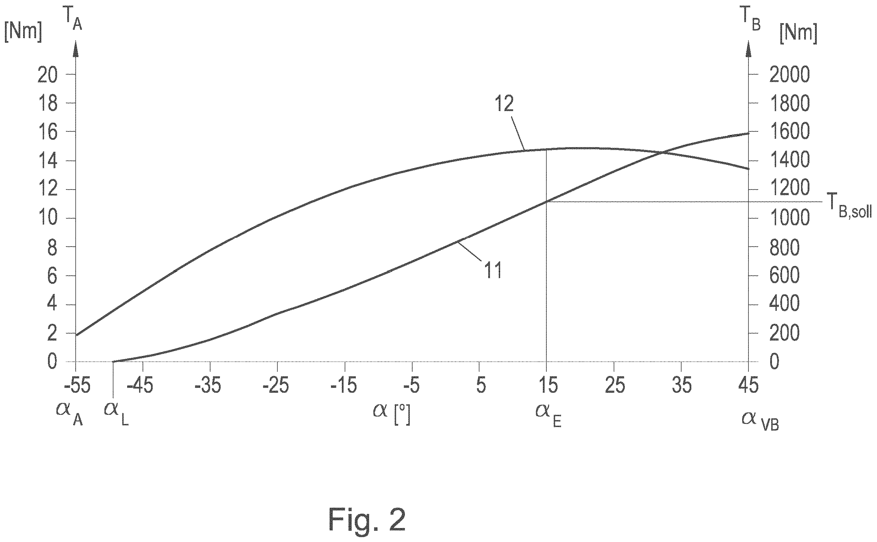

Eine derartige Reibungsbremse 1 hat üblicherweise einen Weg-Bremswirkungsverlauf, der auch nichtlinear sein kann, wie unter Bezugnahme auf die Fig. 2 und 3 näher erläutert wird. Fig.2 zeigt für eine Reibungsbremse 1 wie in Fig.1 dargestellt den beispielhaften Verlauf des Betätigungsmoments T_{A} (Kurve 12) und des daraus resultierenden Bremsmoments T_{B} (Kurve 11) über den Betätigungsweg α, der im gezeigten Ausführungsbeispiel ein Winkel ist. Das Betätigungsmoment T_{A} muss vom Betätigungsmittel 20, hier der Elektromotor 21, aufgebracht werden. Der Betätigungsweg für die Bremsung erstreckt sich dabei von einer Ausgangslage α_{A} bis zu einer Lage bei Vollbremsung α_{VB}, wobei sich der mögliche Arbeitsbereich dazwischen erstreckt. Die Winkellagen werden hier bezogen auf eine Nullstellung, die dem unteren Totpunkt des Exzenters entspricht (Fig.3), angegeben. Die Exzentrizität E (stark übertrieben dargestellt in der Fig.3) ist dabei z.B. 0,5 mm, sodass für den theoretisch maximalen Verdrehwinkel von -90° (scheibenfernes Maximum) bis +90° (scheibennahes Maximum) ein theoretisch maximaler Hub des Bremsbelages 6 von 1mm entsteht. Davon wird in der Regel praktisch etwas weniger genutzt, z.B. von -60° in der Ausgangslage α_{A} bis zur Vollbremsung α_{VB} bei z.B. +60°, womit sich ein Betätigungsweg bei Vollbremsung von 120° ergeben würde. Eine normale Bremsung wird dabei in der Regel einen kleineren Betätigungsweg aufweisen zwischen einer Ausgangslage α_{A} und einer Endlage α_{E}, z.B. 15°, bei der das jeweils benötigte Bremsmoment T_{B,soll} erreicht wird.

Zu Beginn der Betätigung muss der Luftspalt 13 überwunden werden. Das bedeutet, dass von der Ausgangslage α_{A} ausgehend ein gewisser Betätigungsweg zurückgelegt werden muss, bis bei einem Kontaktpunkt α_{L} der Luftspalt 13 überwunden ist und der Bremsbelag 6 an der Reibfläche 14 anliegt. Ab diesem Kontaktpunkt α_{L} wird eine Bremswirkung erzeugt, z.B. ein Bremsmoment T_{B}.

Durch den nicht-linearen Betätigungsmechanismus der Reibungsbremse 1 nach Fig.1 wird Anfangs schnell der kraftarme Betätigungsweg zurückgelegt und mit steigender Bremsanpresskraft die mechanische Übersetzung zugunsten kleiner werdender Betätigungswegzunahme (und Eingangskraftzunahme) verändert. Wenn der Exzenter weiter zur Reibfläche 14 gedreht wird, nimmt die Betätigungswegsteigerung ab und die Belagsandrückkraft bei gleicher Eingangskraft (bzw. Eingangsmoment) zu. Man erkennt in Fig.2, dass ohne weiteres Ansteigen des Betätigungsmoments T_{A} durch den Exzenter aufgrund der Nichtlinearität immer höhere Bremsmomente T_{B} erzeugt werden. Zusätzlich zur Nichtlinearität in Vorwärtsfahrtrichtung kann in der Reibungsbremse 1 auch bekannte Selbstverstärkung auftreten, weshalb das Betätigungsmoment T_{A} hier z.B. ab ca. 20° Betätigungsweg α sogar absinkt. Selbstverstärkung kann im gezeigten Ausführungsbeispiel ab einem Betätigungsweg α=0° beginnen, also wenn der Exzenter den unteren Totpunkt überschreitet. Selbstverständlich könnte die Reibungsbremse 1 aber auch so ausgeführt sein, dass keine Selbstverstärkung auftritt, z.B. indem der Bremsbelag 6 oder der Belagsträger 5 nur lose am Halteteil 7 anliegt, wodurch die Reibkraft zwischen Bremsbelag und Reibfläche nicht in die Andrückeinrichtung 10 übertragen werden würde, was Voraussetzung für Selbstverstärkung wäre.

Die obigen Überlegungen gelten natürlich allgemein für eine Reibungsbremse und folglich in analoger Weise auch für Reibungsbremsen anderer Bauart.

Für die Bremsbetätigung wird von der Reibungsbremse 1 eine bestimmte Bremswirkung gefordert, beispielsweise von einem Fahrer eines Fahrzeugs über das Bremspedal, von einem Brems- oder Stabilitätssystem eines Fahrzeugs, von einer Bremsensteuerung einer Maschine, usw. Als Bremswirkung kann wie bereits erwähnt beispielsweise eine Normalkraft (Bremsanpresskraft), eine Reibkraft (als Produkt von Normalkraft und Reibbeiwert) oder ein Bremsmoment (als Produkt aus Reibkraft und angenommenen Reibradius) verwendet werden. Diese Bremswirkung ist dann von der Reibungsbremse 1 durch Betätigen der Reibungsbremse 1 mittels der Andrückeinrichtung 10 und dem Betätigungsmittel 20 einzustellen. Hierfür benötigt man ein Wirkungsmaß WM, mit dem man bei Betätigung der Reibungsbremse 1 auf eine bestimmte Bremswirkung rückschließen kann. Das Wirkungsmaß WM ist damit ein Maß für die Bremswirkung. Als Wirkungsmaß WM kann natürlich direkt eine Bremswirkung herangezogen werden, also beispielsweise ein Bremsmoment oder eine Bremsandrückkraft. Als Wirkungsmaß kann aber auch eine mit der Bremswirkung in Zusammenhang stehende oder eine davon abhängige oder abgeleitete Wirkungsgröße herangezogen werden. Beispielsweise kann als Wirkungsmaß eine Betätigungsenergie (als Summe oder Integral von Kraft*Weg oder Drehmoment*Winkel) herangezogen werden, wie in WO 2014/170259 A2 beschrieben, die benötigt wird, um die Bremswirkung zu erzeugen. Ebenso könnte der Motorstrom oder das Motormoment des Elektromotors 21 als Wirkungsmaß herangezogen werden. Es könnten natürlich bei einer Bremsbetätigung zu gewissen Zeitpunkten auch Augenblickswerte ermittelt werden, beispielsweise einer Energie oder eines elektrischen Stromes des Elektromotors 21, und durch Summenbildung über die Augenblickswerte das aktuelle Wirkungsmaß WM berechnet werden. Natürlich gibt es noch eine Reihe andere Möglichkeiten für das Wirkungsmaß WM, das nicht einmal eine physikalische Größe sein muss. Entscheidend ist lediglich, dass anhand des Wirkungsmaßes WM eindeutig auf eine bei der Betätigung wirkende Bremswirkung geschlossen oder umgerechnet werden kann.

Genauso kann anstelle des Betätigungsweges allgemein ein Betätigungsmaß BM herangezogen werden. Das Betätigungsmaß BM kann dabei entweder direkt der Betätigungsweg α sein, oder eine davon abgeleitete oder in Zusammenhang stehende Betätigungsgröße. Als Betätigungsmaß BM kann beispielsweise auch die elastische Deformation der Reibungsbremse 1 bei Betätigung herangezogen werden, die natürlich unmittelbar vom Betätigungsweg und vom bekannten elastischen Verhalten der Reibungsbremse 1 abhängig ist. Ebenso könnte die Drehzahl oder Drehwinkel des Elektromotors 21 als Betätigungsmaß BM verwendet werden. Das Betätigungsmaß BM ist damit ein Maß für die Betätigung der Reibungsbremse 1, oder anders ausgedrückt ein Maß dafür wieviel Betätigungsweg für die Betätigung zurückgelegt wurde.

Verallgemeinert kann das Betätigungsverhalten der Reibungsbremse 1 daher in Form einer Wirkungsmaß-Betätigungsmaß Kennlinie 30 dargestellt werden, beispielsweise in Form der Bremsmoment-Betätigungsweg Kennlinie 11 so wie in der Fig.2. Diese Wirkungsmaß-Betätigungsmaß Kennlinie kann beispielsweise für eine Reibungsbremse 1 gemessen werden, aus einer Festigkeitsberechnung berechnet oder simuliert (z.B. durch Finite Element Simulation) werden, aus mathematischen Modellen der Reibungsbremse 1 berechnet werden, usw., und kann grundsätzlich als bekannt vorausgesetzt werden. Diese Wirkungsmaß-Betätigungsmaß Kennlinie 30 kann dabei auch von anderen Einflussgrößen, wie beispielsweise von der Temperatur der Reibungsbremse 1 oder Teilen davon, vom Verschleißzustand des Bremsbelages und/oder der Reibfläche 14, etc. abhängig sein. Das kann auch zu mehreren Kennlinien (z.B. auch in Form von Kennfeldern) für verschiedene Einflussgrößen führen, also beispielweise zu einem Kennlinienfeld mit Kennlinien für verschiedene Temperaturen (bzw. Steifigkeiten der Reibungsbremse 1) oder für verschiedene Verschleißzustände des Bremsbelages 3, 6. Wie diese bekannten Kennlinien für eine Steuereinheit der Reibungsbremse 1 hinterlegt sind, beispielsweise in Tabellenform, in Form eines funktionalen Zusammenhanges, etc., spielt dabei keine Rolle.

Nachdem die Wirkungsmaß-Betätigungsmaß Kennlinie 30 eine Bremswirkung der Reibungsbremse 1 abbildet, bezieht sich die Wirkungsmaß-Betätigungsmaß Kennlinie 30 natürlich auf einen anliegenden Bremsbelag 6 ab dem Kontaktpunkt α_{L}, da es ansonsten zu keiner Bremswirkung oder Deformation kommen kann. Vor dem Kontaktpunkt α_{L} muss natürlich der Luftspalt 13 überwunden werden, wie anhand Fig.2 erläutert wurde.

Dabei könnte der Kontakt des Bremsbelages 6 mit der Reibfläche 14 messtechnisch erfasst werden, beispielsweise mittels Kraftsensoren. Das ist aber in einer Reibungsbremse 1 an sich unvorteilhaft, weil eine Reibungsbremse 1 eine sicherheitsrelevante Einrichtung ist, woraus sich auch hohe Anforderungen an die funktionale Sicherheit einer allfälligen Sensorik im Zusammenhang mit einer Reibungsbremse 1 ergeben. Eine solche Sensorik müsste daher auch funktional sicher ausgeführt sein, was in der Regel eine redundante Ausführung der Sensorik erfordert. Da eine Reibungsbremse 1 aber gleichzeitig auch ein Massenprodukt ist, unterliegt es auch einem hohen Kostendruck, weshalb eine redundante Ausführung irgendwelcher Teil der Reibungsbremse 1 aus Kostengründen unvorteilhaft wäre. Es wird daher im Sinne der Erfindung davon ausgegangen, dass der Luftspalt 13 in einem bestimmten Zustand der Reibungsbremse 1 bekannt ist, weil dieser nach einer Bremsung kontrolliert eingestellt wird, wie nachfolgend noch im Detail beschrieben wird. Damit ist auch bekannt, wieviel Betätigung (z.B. Betätigungsweg) notwendig ist, um den Luftspalt 13 zu überwinden und der Luftspalt 13 muss nicht messtechnisch erfasst werden.

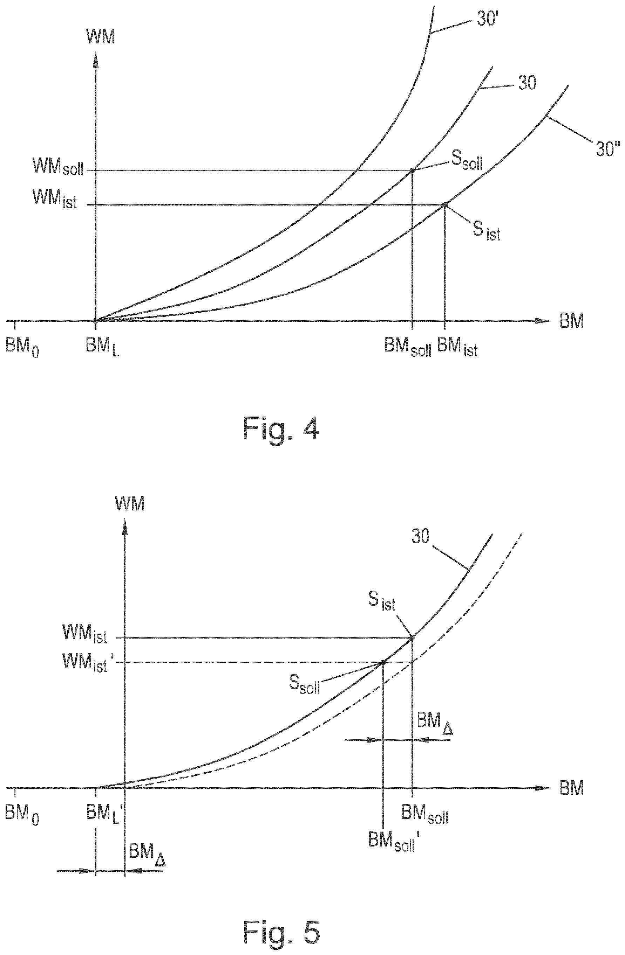

Für die Durchführung einer Bremsung mit der Reibungsbremse 1 wird daher beispielsweise wie nachfolgend mit Bezugnahme auf die Fig.4 erläutert vorgegangen. Fig.4 zeigt dazu beispielsweise eine Wirkungsmaß-Betätigungsmaß Kennlinie 30 einer Reibungsbremse 1. Für die Bremsung wird eine Bremswirkung angefordert, z.B. ein bestimmtes Bremsmoment. Diese Bremswirkung kann, anhand des vorgegebenen bzw. bekannten Zusammenhanges mit dem Wirkungsmaß WM, unmittelbar in ein Wirkungsmaß WMₛₒₗₗ als Maß für die gewünschte Bremswirkung übersetzt werden. Natürlich könnte auch direkt ein benötigtes Wirkungsmaß WMₛₒₗₗ vorgegeben werden. Aus der gegebenen Wirkungsmaß-Betätigungsmaß Kennlinie 30 kann dann das Betätigungsmaß BMₛₒₗₗ, als Maß für den einzustellenden Betätigungsweg der Reibungsbremse 1, ausgelesen werden, das zum Erreichen des Wirkungsmaßes WMₛₒₗₗ einzustellen ist. Dieses Betätigungsmaß BMₛₒₗₗ ist aber natürlich nur das Betätigungsmaß ab Kontaktpunkt α_{L}, also ab dem Zeitpunkt ab dem der Bremsbelag 6 an der Reibfläche 14 anliegt. Die Reibungsbremse 1 wird dann betätigt, bis das Betätigungsmaß BMₛₒₗₗ erreicht ist. Für eine Bremsung soll also ein bestimmter Punkt Sₛₒₗₗ auf der Wirkungsmaß-Betätigungsmaß Kennlinie 30 angefahren werden.

Bevor eine Bremswirkung eintreten kann, muss daher natürlich der Luftspalt 13 überwunden werden. D.h., dass die Betätigung der Reibungsbremse 1 bei einem Betätigungsmaß BM₀ vor dem Kontaktpunkt beim Betätigungsmaß BM_{L}, bei dem der Bremsbelag 6 beginnt an der Reibfläche 14 anzuliegen, beginnt. Damit setzt sich die gesamte Betätigung der Reibungsbremse 1 aus der Überwindung des bekannten Luftspalts 13 (BM_{L}-BM₀) und der für die Einstellung der gewünschten Bremswirkung benötigten Betätigung (BMₛₒₗₗ-BM_{L}) zusammen. Nach der Bremsung wird wieder auf den Anfang bei BM₀ zurückgestellt.

In Fig.4 ist auch angedeutet, dass es für verschiedene Einflussgrößen, wie z.B. verschiedene Temperaturen oder Verschleißzustände der Reibungsbremse 1, verschiedene Wirkungsmaß-Betätigungsmaß Kennlinien 30, 30', 30" geben kann. Für eine Bremsbetätigung wird dann natürlich diejenige Wirkungsmaß-Betätigungsmaß Kennlinie 30, 30', 30" herangezogen, die dem aktuellen Wert der Einflussgröße am nächsten kommt. Hierbei kann natürlich bei Bedarf auch zwischen vorhandenen Kennlinien interpoliert werden.

Aus der WO 2014/170259 A2 ist dieses grundlegende Vorgehen anhand einer Betätigungsenergie als Wirkungsmaß WM und dem Verdrehwinkel als Betätigungsmaß BM beschrieben. Aufgrund von diversen Einflüssen kann es dabei sein, dass das tatsächlich erreichte Wirkungsmaß WMᵢₛₜ, das gemessen oder geschätzt werden kann, am eingestellten Betätigungsmaß BMₛₒₗₗ aber vom erwarteten Wirkungsmaß WMₛₒₗₗ abweicht, wie in Fig.4 dargestellt. Ebenso ist es denkbar, dass nicht das angestrebte Betätigungsmaß BMₛₒₗₗ erreicht wird, sondern ein davon abweichendes Betätigungsmaß BMᵢₛₜ, das gemessen oder geschätzt werden kann. Bei einer tatsächlichen Bremsung kann es daher passieren, dass nicht der gewünschte Punkt Sₛₒₗₗ der Wirkungsmaß-Betätigungsmaß Kennlinie 30 angefahren wird, sondern ein davon abweichender Punkt Sᵢₛₜ. Diese Abweichung kann nun noch ausgeglichen werden, indem das Betätigungsmaß BM entsprechend erhöht oder verringert wird, also der Bremsbelag 6 weiter angedrückt oder etwas abgehoben wird, um die gewünschte Bremswirkung einzustellen. Dieses Verfahren funktioniert an sich schon sehr gut, soll nun aber erfindungsgemäß hinsichtlich der Genauigkeit und Schnelligkeit der Bremsung noch verbessert werden.

Dazu wird ein thermisches Modell der Reibungsbremse 1 verwendet, mit dem die thermische Ausdehnung der Reibungsbremse 1 in Abhängigkeit von einer aktuellen Temperatur der Reibungsbremse 1 ermittelt werden kann. Als thermisches Modell der Reibungsbremse 1 wird hierzu insbesondere auch ein Modell eines oder mehrerer Teile der Reibungsbremse 1 verstanden. Es ist also nicht erforderlich, dass das thermische Modell das thermische Verhalten der gesamten Reibungsbremse 1 modelliert. Es können auch verschiedene Bauteile der Reibungsbremse 1 durch verschiedene, verknüpfte thermische Teilmodelle modelliert werden. Die Summe der thermischen Teilmodelle ergibt dann das thermische Modell der Reibungsbremse 1. Ein solches thermisches Modell kann vorab aufgrund der bekannten Konstruktion der Reibungsbremse 1 erstellt werden, beispielsweise empirisch, mathematisch anhand von Simulationen oder auch anhand von physikalischen Überlegungen, und wird als gegeben vorausgesetzt. Für die Erfindung spielt es aber an sich keine Rolle, wie das thermische Modell genau aufgebaut ist.

Für das thermische Modell der Reibungsbremse 1 muss eine Temperatur der Reibungsbremse 1 und/oder Temperaturen bestimmte Bauteile der Reibungsbremse 1 und/oder eine Umgebungstemperatur der Reibungsbremse 1 als Eingangsgrößen des Modells entweder gemessen werden, beispielsweise eine Gehäusetemperatur der Reibungsbremse 1 oder eine Temperatur des Elektromotors 21, oder aus einem Temperaturmodell bezogen werden. Auch eine Kombination davon ist denkbar. Bestimmte Temperaturen werden dabei einfach messtechnisch erfasst werden können, wie z.B. eben eine Gehäusetemperatur oder eine Motortemperatur, und werden daher vorzugsweise gemessen. Andere Temperaturen sind hingegen messtechnisch nur sehr aufwendig oder störanfällig erfassbar, wie z.B. Temperatur des Bremsbelages 6 oder der Reibfläche 14, und werden daher vorzugsweise aus geeigneten Temperaturmodellen ermittelt. Dabei können auch mehrere Temperaturteilmodelle verwendet werden, wie z.B. für die Scheibentemperatur, die Belagstemperatur oder die Temperatur bestimmter wärmedehnender Teile. Ein Temperaturmodell besteht sinnvoller Weise aus einer Wärmezufuhr, die z.B. aus der Bremsleistung (z.B. Bremsmoment * Winkelgeschwindigkeit der Reibfläche) oder eines Anteils davon, einem Wärmewiderstand, über den Wärme zugeführt wird, und einer Wärmeabfuhr, die physikalisch gesehen aus Schwarzkörperstrahlung und Abfuhr durch Luft besteht. Wobei bei der Abfuhr durch Luft auch ein statischer Teil (z.B. bei einem stillstehenden Fahrzeug) und ein geschwindigkeitsabhängiger Teil berücksichtigt werden kann. Zusätzlich kann auch eine thermische Trägheit berücksichtigt werden, um auch das Zeitverhalten abzubilden. Das Temperaturmodell kann auch an messbare Temperaturen gekoppelt werden, um z.B. die Umgebungstemperatur zu berücksichtigen oder um die berechneten Werte mit messbaren zu vergleichen und z.B. daraus eine Korrektur durchzuführen. Für die Wärmedehnungen kann man lineares oder nichtlineares Verhalten mit der Temperatur unterstellen. Sinnvollerweise berücksichtigt man die Zeitverzüge des Eintretens einer Wärmedehnung, beispielsweise weil sich der Bremssattel langsamer erwärmt als die Bremsscheibe. Solche Zeitverzüge lassen sich im Modell beispielsweise gut mit ein- und mehrstufigen Tiefpaßfiltern abbilden. Die Wärmewiderstände können konstant sein, oder wie auch immer geschwindigkeitsabhängig (Luftkühlwirkung). Dabei kann es wärmeabführende Widerstände (kühlende) geben und wärmezuführende (wie z.B. die Wärme, die über die Bremsbeläge dem Bremssattel zugeführt werden kann). Diese Wärmewiderstände und sonstigen Modellkomponenten im Modell können reellen Bauteilen zugeordnet sein (wie z.B. einer Bremsscheibe), sie können aber auch bloße Modellparameter sein, die eine Wirkung (z.B. Dehnung) über z.B. Temperatur und Zeit zeigen aber nicht exakt einem Bauteil der Reibungsbremse 1 zugeordnet sind. Für die Erfindung spielt es aber an sich keine Rolle, wie das thermische Modell genau aufgebaut ist.

Mit dem thermischen Modell der Reibungsbremse 1, oder einem Teilmodell des thermischen Modells, kann auch die sich aufgrund der geänderten Temperaturverhältnisse ändernde Steifigkeit der Reibungsbremse 1, oder Teilen davon, ermittelt werden. Damit kann beispielsweise die für die Temperatur oder Steifigkeit richtige Wirkungsmaß-Betätigungsmaß Kennlinie 30, 30', 30" für die Bremsung ausgewählt werden. Ebenso könnte das durch ein entsprechendes Steifigkeitskorrekturmaß SKM berücksichtigt werden. Ist die Reibungsbremse 1 beispielsweise bei höheren Temperaturen weniger steif, dann wird bei einem bestimmten Betätigungsmaß BM ein niedrigeres Wirkungsmaß WM erreicht, weil der Anteil an der Verformung der Reibungsbremse 1 größer ist. Dieser Zusammenhang kann vorab ermittelt werden, beispielsweise empirisch oder durch Simulationen oder Berechnungen, und kann in Form eines Steifigkeitskorrekturmaßes SKM hinterlegt sein, mit dem das Wirkungsmaß WM korrigiert werden kann.

Aufgrund der temperaturabhängigen Wärmedehnung der Reibungsbremse 1 kann sich der Luftspalt 13 verändern. Beispielsweise dehnt sich ein Belagsträger 5 oder ein Bremsbelag 3, 6 mit steigender Temperatur (Luftspalt 13 kann kleiner werden), oder ein Bremssattel weitet sich bei steigender Temperatur aus (Luftspalt 13 kann größer werden). Bei sinkenden Temperaturen ergibt sich natürlich der umgekehrte Effekt. Das kann beispielsweise dazu führen, dass der Luftspalt 13 kleiner (oder größer) wird und der Kontaktpunkt α_{L} (Betätigungsmaß BM_{L}') tatsächlich früher (oder später erreicht) erreicht wird, als angenommen (wie in Fig.5 angedeutet). Damit wird bereits früher eine Bremswirkung aufgebaut und es wird sich am anzufahrenden Betätigungsmaß BMₛₒₗₗ ein tatsächliches Wirkungsmaß WMᵢₛₜ einstellen, das z.B. einer zu hohen Bremswirkung entspricht. Es kann natürlich auch der umgekehrte Fall eintreten.

Dieser Einfluss wird greifbar, wenn man bedenkt, dass die Temperatur einer Reibungsbremse 1 bei einer einzigen Bremsung durchaus um mehrere hundert °C ansteigen kann, was zu signifikanten Wärmedehnungen führen kann. Es wird daher erfindungsgemäß mit dem thermischen Modell der Reibungsbremse 1 die thermische Ausdehnung der Reibungsbremse 1, oder Teilen davon, ermittelt, um die temperaturbedingte Verschiebung des Kontaktpunktes von Bremsbelag 6 und Reibfläche 14 zu ermitteln. Die thermische Ausdehnung wird dabei natürlich auf eine Referenztemperatur bezogen, auf die auch die verwendete Wirkungsmaß-Betätigungsmaß Kennlinie 30 bezogen ist. Die Verschiebung des Kontaktpunktes kann natürlich aufgrund des bekannten Zusammenhanges in eine Verschiebung des Betätigungsmaßes BM_{Δ} umgerechnet werden. Für die Betätigung der Reibungsbremse 1 wird für die Bremsung dann das anzufahrenden Betätigungsmaß BMₛₒₗₗ um die Verschiebung des Betätigungsmaßes BM_{Δ} vorzeichenrichtig korrigiert. Die Korrektur muss dabei nicht zwingend mit der gesamten Verschiebung des Betätigungsmaßes BM_{Δ} erfolgen, sondern kann auch nur ein Teil δ davon sein, also δ·BM_{Δ}, mit δ ∈ ]0,1]. Dieses korrigierte Betätigungsmaß BMₛₒₗₗ' wird dann für die Bremsung herangezogen und führt zum korrigierten Wirkungsmaß WMᵢₛₜ^{'} (Fig.5). Damit kann schon bei der Bremsung die Abweichung zwischen den Punkten Sᵢₛₜ und Sₛₒₗₗ (Fig.4) verkleinert werden, im Idealfall gänzlich ausgeglichen werden. Im Idealfall muss dann keine Abweichung mehr korrigiert werden, oder nur mehr eine kleinere Abweichung ausgeglichen werden.

Das erfindungsgemäße Verfahren beruht darauf, dass man die Verschiebung des Kontaktpunktes aufgrund des thermischen Zustands der Reibungsbremse 1 ermittelt. Auch andere Einflussgrößen auf die Genauigkeit der Reibungsbremse 1 können temperaturabhängig sein, beispielsweise die Steifigkeit, die zu verschiedenen Wirkungsmaß-Betätigungsmaß Kennlinien 30, 30', 30" führen kann. Eine Wirkungsmaß-Betätigungsmaß Kennlinie 30, 30`, 30" ist dabei allerdings temperaturunabhängig, d.h. es wird nicht berücksichtigt, dass sich für eine Bremsung die Temperatur der Reibungsbremse 1 signifikant ändern kann. Das führt natürlich zu einer gewissen Ungenauigkeit. Andererseits steckt auch in der Ermittlung der Verschiebung des Kontaktpunktes eine gewisse Ungenauigkeit. Diese Ungenauigkeiten führen bei einer Bremsung zu einer zu hohen oder zu niedrigen Bremswirkung. Für das erfindungsgemäße Verfahren ist es daher vorteilhaft, wenn sich die Ungenauigkeiten zumindest teilweise kompensieren und nicht addieren. Beispielsweise könnte das thermische Modell so gestaltet sein, dass ein Fehler in der Ermittlung des Kontaktpunktes hinsichtlich der Bremswirkung tendenziell in eine andere Richtung geht, als ein Fehler, der sich aufgrund sich verändernder Steifigkeit über die Wirkungsmaß-Betätigungsmaß Kennlinie 30, 30', 30" in die Bremsung eingebracht wird. Eine aufgrund höherer Temperatur weicher werdende Reibungsbremse 1 führt zu einer niedrigeren Bremswirkung. Der Fehler in der Kontaktpunktermittlung könnte nun so im Modell enthalten sein, dass eine Bremsung tendenziell zu einer höheren Bremswirkung führt.

Auf ähnliche Weise können natürlich auch andere Einflüsse auf die Genauigkeit einer Bremsung ausgeglichen werden, entweder zusätzlich oder auch alternativ.

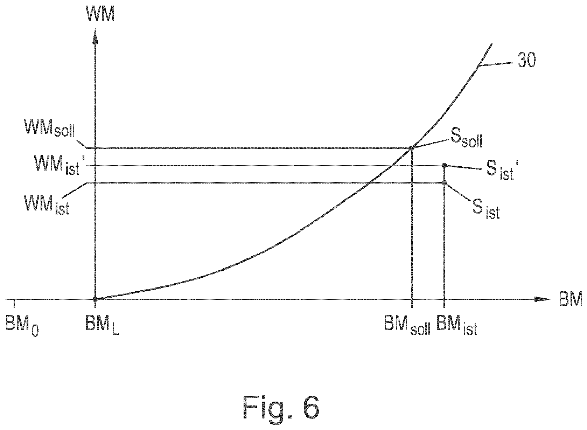

Ein weiterer relevanter Einfluss auf die Genauigkeit ist die Massenträgheit des Betätigungsmittels 20, beispielsweise die Massenträgheit des Elektromotors 21. Ein Teil der für die Betätigung der Reibungsbremse 1 aufgewendeten Energie steckt damit in der kinetischen Energie der bewegten Teile und wird nicht zum Anpressen des Bremsbelages 6 verwendet. Das Wirkungsmaß WM wird bei der Bremsung laufend ermittelt, beispielsweise gemessen oder aus Messwerten berechnet, um am Ende der Betätigung das Wirkungsmaß WMᵢₛₜ zu kennen. Wird die in der Betätigung steckende kinetische Energie dabei nicht berücksichtigt, dann wird das tatsächliche Wirkungsmaß WMᵢₛₜ' aber vom während der Betätigung ermittelten Wirkungsmaß WMᵢₛₜ abweichen, wie in Fig.6 dargestellt. Die tatsächliche Abweichung zwischen dem angeforderten Wirkungsmaß WMₛₒₗₗ und dem ermittelten Wirkungsmaß WMᵢₛₜ ist damit ebenfalls verfälscht. Obwohl diese Abweichung nachträglich ausgeglichen wird, bliebe damit ein Fehler erhalten, weil dabei von einem falschen ermittelten Wirkungsmaß WMᵢₛₜ, und nicht vom tatsächlichen Wirkungsmaß WMᵢₛₜ', ausgegangen wird.

Zur Veranschaulichung wird von einem Elektromotor 21 als Betätigungsmittel 20 ausgegangen. Allfällige bewegte Teile zwischen dem Elektromotor 21 und dem Halteteil 7 der Andrückeinrichtung 10 (z.B. wie in Fig.1 dargestellt) werden der Einfachheit halber vernachlässigt. Der Elektromotor 21 mit bekanntem Massenträgheitsmoment dreht zur Betätigung mit hoher Drehzahl, was eine kinetischen Energie, hier eine Rotationsenergie, ergibt. Wenn als Wirkungsmaß WM nun die Betätigungsenergie herangezogen wird, wie z.B. in der WO 2014/170259 A2 beschrieben, und beispielsweise laufend durch Aufsummieren von aktuellen Drehmoment * aktuellen Drehwinkel ermittelt wird, dann wird dabei der Anteil der kinetischen Energie vernachlässigt. Ein Teil dieser Betätigungsenergie wird nicht zum Erzeugen einer Bremswirkung verwendet, sondern steckt in der kinetischen Energie des Elektromotors 21. Am Ende der Bremsung hat man dann aber eine niedrigere Bremswirkung erzielt, als die ermittelte Betätigungsenergie glauben lässt.

Es wird daher die kinetische Energie der Andrückeinrichtung 10 oder Teilen davon bei der Ermittlung des Wirkungsmaß WMᵢₛₜ, zumindest während eines Teils des Bremsvorganges, berücksichtigt, indem der Anteil der kinetischen Energie als Korrekturmaß KM, oder Teil des Korrekturmaßes KM, herausgerechnet wird. Am stärksten macht sich die kinetische Energie bei hohen Geschwindigkeiten der bewegten Teile der Andrückvorrichtung 10 bemerkbar, weshalb diese zumindest dabei berücksichtigt wird. Die Massenträgheit der bewegten Teile, oder zumindest der berücksichtigten bewegten Teile, kann dabei aufgrund der bekannten Geometrie und Konstruktion der Reibungsbremse 1 als bekannt vorausgesetzt werden. Im Falle einer Betätigungsenergie als Wirkungsmaß WM ist das natürlich sehr einfach möglich. Die kinetische Energie kann aber aufgrund der bekannten geometrischen, kinematischen und konstruktiven Zusammenhänge in der Reibungsbremse 1 auch aus anderen Wirkungsmaßen WM herausgerechnet werden. Damit ist das ermittelte Wirkungsmaß WMᵢₛₜ am Ende der Bremsung deutlich genauer, was auch die Bremsung als solche genauer macht.

In gleicher Weise kann gegebenenfalls auch die kinetische Energie berücksichtigt werden, die für die Überwindung des Luftspaltes 13 benötigt wird. Wenn als Wirkungsmaß beispielsweise die Betätigungsenergie des Betätigungsmittels 20, z.B. der Elektromotor 21, verwendet wird, dann wird natürlich auch zur Überwindung des Luftspaltes 13 Betätigungsenergie aufgewendet, die jedoch nicht in Bremswirkung mündet. Nachdem der Luftspalt 13 bekannt ist, kann dieser Energieanteil als Korrekturmaß KM, oder Teil des Korrekturmaßes KM, natürlich aus dem ermittelten Wirkungsmaß WMᵢₛₜ am Ende des Bremsvorganges herausgerechnet werden, um die Genauigkeit zu erhöhen. Dabei kann natürlich auch die Veränderung des Luftspaltes 13 durch die temperaturbedingte Wärmedehnung der Reibungsbremse 1, oder Teilen davon, berücksichtigt werden.

Es müssen dabei nicht unbedingt alle bei einer Bremsung bewegten Teile der Reibungsbremse 1 bei der Ermittlung der kinetischen Energie berücksichtigt werden, sondern es ist ausreichend, wenn die wesentlichen Beiträge berücksichtigt werden.

Die Berücksichtigung der kinetischen Energie bewegter Teile der Reibungsbremse 1 kann zusätzlich zur Berücksichtigung der temperaturabhängigen Verschiebung des Kontaktpunktes gemacht werden. Es wird aber ausdrücklich angemerkt, dass die Berücksichtigung der kinetischen Energie für sich alleine, also auch ohne Berücksichtigung der temperaturabhängigen Verschiebung des Kontaktpunktes, möglich ist und ebenfalls als erfinderisch angesehen wird.

Auf grundsätzlich analoge Weise können auch andere Einflüsse berücksichtigt werden, weil jeder Einfluss als eine Verfälschung des Wirkungsmaßes WM oder des Betätigungsmaßes BM gesehen werden kann.

Beispielsweise könnte in der Reibungsbremse 1 eine Feder gemäß einer Federkennlinie in Abhängigkeit vom Betätigungsweg (oder allgemein dem Betätigungsmaß BM) auf den Betätigungsmechanismus wirken, wobei die Feder natürlich nicht über den gesamten Betätigungsweg wirken muss. Eine solche Feder kann damit der Betätigung Energie zuführen (beim Entspannen der Feder) oder Energie abführen (beim Spannen der Feder). Ähnlich wie die kinetische Energie wird damit das ermittelte Wirkungsmaß WMᵢₛₜ am Ende der Bremsung vom tatsächlich erreichten Wirkungsmaß WMᵢₛₜ' abweichen. Nachdem die Wirkung der Feder über die Betätigung als bekannt angenommen werden kann (z.B. über die Federkennlinie und die Konstruktion der Reibungsbremse 1), kann dieser Einfluss aber wieder als Korrekturmaß KM, oder Teil des Korrekturmaßes KM, bei der Ermittlung des Wirkungsmaßes WMᵢₛₜ berücksichtigt werden, um die Genauigkeit zu erhöhen.

Das gleiche gilt für Selbstverstärkung der Reibungsbremse 1, die aufgrund der bekannten Geometrie der Reibungsbremse 1 in Abhängigkeit vom Betätigungsweg (oder allgemein dem Betätigungsmaß BM) als bekannt angesehen werden kann. Eintretende Selbstverstärkung unterstützt natürlich die Bremsung, sodass ohne Berücksichtigung das tatsächlich erreichte Wirkungsmaß WMᵢₛₜ' vom ermittelten Wirkungsmaß WMᵢₛₜ am Ende der Bremsung abweichen kann. Die Wirkung der Selbstverstärkung, die aufgrund der Konstruktion der Reibungsbremse 1 bekannt ist, kann daher wieder als Korrekturmaß KM, oder Teil des Korrekturma-ßes KM, berücksichtigt werden.

In das Korrekturmaß KM können somit verschiedene Effekte einfließen, um die Betätigung der Reibungsbremse 1 genauer zu machen, insbesondere indem die Ermittlung des Wirkungsmaßes WMᵢₛₜ genauer wird.

All diese Effekte können natürlich auch noch von anderen Einflussgrößen, wie Temperatur oder Verschleiß in der Reibungsbremse 1 abhängig sein und abhängig gemacht werden.

Die Wirkungsmaß-Betätigungsmaß Kennlinie 30 (oder ein ganzes Kennlinienfeld) wird in der Bremsensteuerung der Reibungsbremse 1 hinterlegt. Dabei wird man für jede Reibungsbremse 1 desselben Typen die gleiche Wirkungsmaß-Betätigungsmaß Kennlinie 30 hinterlegen. Aufgrund von fertigungstechnischen und materialtechnischen Toleranzen kann es aber natürlich vorkommen, dass das reale Verhalten der Reibungsbremse 1 von der hinterlegten Wirkungsmaß-Betätigungsmaß Kennlinie 30 etwas abweicht. Um diesen Einfluss zu reduzieren kann noch vorgesehen sein, bei der Fertigung oder Montage der Reibungsbremse 1 zur Feinkalibrierung Messungen mit der Reibungsbremse 1 vorzunehmen, um vorgegebene Punkte auf der Wirkungsmaß-Betätigungsmaß Kennlinie 30 zu vermessen. Aus diesen Messungen und der festgestellten Abweichung zur hinterlegten Wirkungsmaß-Betätigungsmaß Kennlinie 30 können dann Kalibrierfaktoren KF, beispielsweise in Form von Kalibrierkennlinien über den Betätigungsweg (oder allgemein dem Betätigungsmaß BM), abgeleitet werden, die ebenfalls in der Bremsensteuerung hinterlegt werden. Die Bremsensteuerung kann dann die hinterlegte Wirkungsmaß-Betätigungsmaß Kennlinie 30 mit den Kalibrierfaktoren KF an die realen Verhältnisse anpassen, womit ebenfalls die Genauigkeit erhöht werden kann.

Mit den beschriebenen Korrekturen (wobei nicht alle angewendet werden müssen), werden die erfassten Punkte Sᵢₛₜ geringfügig um die theoretischen Punkte Sₛₒₗₗ auf der Wirkungsmaß-Betätigungsmaß Kennlinie 30 streuen. Auch diese verbleibenden Abweichungen, beispielsweise aufgrund von Verlusten in der Reibungsbremse 1 oder nicht berücksichtigten Effekten, könnten noch reduziert werden. Dazu kann für die Reibungsbremse 1 ein Korrekturfaktor KOF hinterlegt oder definiert sein, mit dem das angesteuerte Betätigungsmaß BMᵢₛₜ und/oder ermittelte Wirkungsmaß WMᵢₛₜ korrigiert wird. Ein Korrekturfaktor KOF für das Betätigungsmaß BM und das Wirkungsmaß WM muss natürlich nicht gleich sein. Ein solcher Korrekturfaktor kann empirisch ermittelt werden und z.B. als Kennlinie oder neuronales Netz oder Fuzzy-Logik hinterlegt sein, kann aber auch als funktionaler (linearer oder nichtlinearer) Zusammenhang definiert sein.

Wenn die Bremsensteuerung der Reibungsbremse 1 oftmals ein anderes Verhalten der Reibungsbremse 1 feststellt, als anhand der hinterlegten Wirkungsmaß-Betätigungsmaß Kennlinie 30 zu erwarten wäre, könnte die hinterlegte Wirkungsmaß-Betätigungsmaß Kennlinie 30 auch adaptiert werden. Eine derartige Abweichung kann beispielsweise darauf zurückzuführen sein, dass in die Reibungsbremse 1 Bremsbeläge 3, 6 mit einer anderen Steifigkeit als erwartet eingebaut wurden. Die Bremsensteuerung kann laufend die Abweichungen am Ende der Bremsung beobachten und bei oftmaligen Abweichungen über eine gewisse Toleranz hinaus die Wirkungsmaß-Betätigungsmaß Kennlinie 30 korrigieren. Dazu können Korrekturfaktoren (beispielsweise wie oben beschrieben) definiert werden oder die Wirkungsmaß-Betätigungsmaß Kennlinie 30 könnte in Richtung höherer oder niedriger Bremswirkung verschoben werden. Es könnte aber auch bloß eine Warnung oder ein Fehler ausgegeben werden oder in einen Speicher geschrieben werden, oder es kann auch auf anderer Weise darauf reagiert werden.

Wie oben bereits erwähnt wird davon ausgegangen, dass der Luftspalt 13 bei einem Bremsvorgang bekannt ist. Daher ist es vorteilhaft, wenn nach dem Bremsvorgang wieder ein gewünschter Luftspalt 13 eingestellt wird. So kann sichergestellt werden, dass auch für den nächsten Bremsvorgang der Luftspalt 13 bekannt ist. Der Luftspalt 13 kann nach dem Bremsvorgang über den Verschleißnachsteller 11 oder die Andrückeinrichtung 10, oder auch durch beide, auf einen gewünschten Wert eingestellt werden.

Um nicht ständig den Luftspalt 13 nachstellen zu müssen, was den Verschleißnachsteller 11 belasten würde, kann vorgesehen sein, den Luftspalt 13 erst dann nachzustellen, wenn nach einer Bremsung mit der Reibungsbremse 1 eine Abweichung zwischen dem gewünschten Wirkungsmaß WMₛₒₗₗ und dem tatsächlich ermittelten Wirkungsmaß WMᵢₛₜ einen vorgegebenen Schwellwert WM_{S} überschreitet, wenn also |*WMₛₒₗₗ* - *WMᵢₛₜ*| > *WM_{S}.* Aus der Größe der Abweichung kann dann ein Nachstellmaß NM abgeleitet werden, vorzugsweise ein Verstellweg des Verschleißnachstellers 11, das nach der Bremsung eingestellt wird. Aus der bekannten Wirkungsmaß-Betätigungsmaß Kennlinie 30 kann die Abweichung beispielsweise in ein Betätigungsmaß BM umgewandelt werden, das dann als Nachstellmaß NM verwendet werden kann. Es könnte aber auch vorgesehen sein, die Abweichung zwischen dem gewünschten Wirkungsmaß WMₛₒₗₗ und dem tatsächlich ermittelten Wirkungsmaß WMᵢₛₜ mittels der hinterlegten Wirkungsmaß-Betätigungsmaß Kennlinie 30 in eine Abweichung des Betätigungsmaßes BM umzuwandeln, um eine von der Stärke der Bremsung unabhängigeres Nachstellmaß NM abzuleiten. Durch die Verschleißnachstellung wird somit mit dem Nachstellmaß NM der Punkt BM₀ nachgestellt, da sich aufgrund des Verschleißes der Luftspalt 13 bzw. (BM_{L}-BM₀) verändert (in der Regel vergrößert) hat.

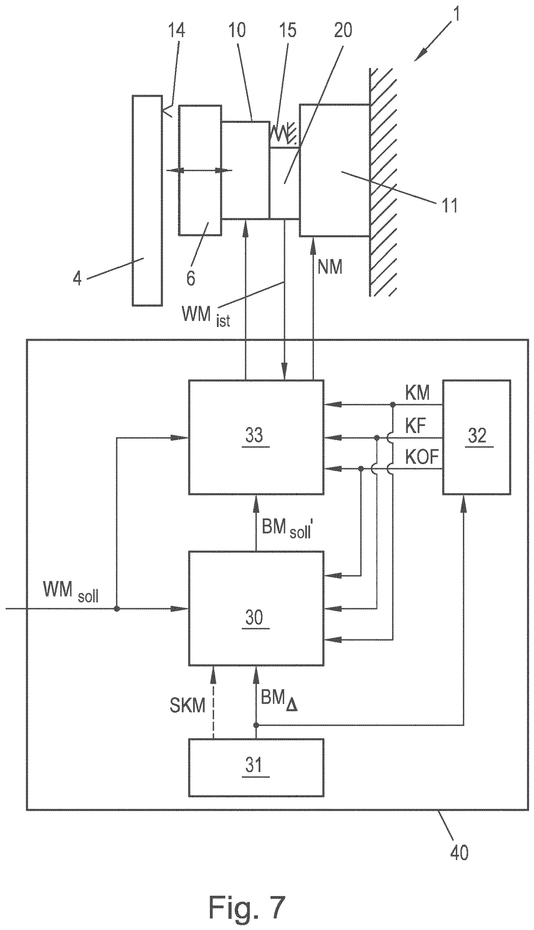

Eine beispielhafte Bremsensteuerung 40 einer Reibungsbremse 1 ist in Fig.7 dargestellt. Die Bremsensteuerung 40 ist in geeigneter Hardware und mit der benötigten Software realisiert. Der Bremsensteuerung 40 wird, beispielsweise von extern, ein einzustellendes Wirkungsmaß WMₛₒₗₗ, oder äquivalent eine gewünschte Bremswirkung, vorgegeben. Aus der in der Bremsensteuerung 40 hinterlegten Wirkungsmaß-Betätigungsmaß Kennlinie 30 der Reibungsbremse 1 wird ein einzustellendes Betätigungsmaß BMₛₒₗₗ ermittelt. Während des Bremsvorganges wird das Wirkungsmaß WMᵢₛₜ ermittelt, beispielsweise die Betätigungsenergie eines Elektromotors 21 als Betätigungsmittel 20. Das aktuelle Wirkungsmaß WMᵢₛₜ kann dabei natürlich auch in der Steuereinheit 33 aus Messgrößen der Reibungsbremse 1, beispielsweise aus aktuellen Werten von Motorstrom bzw. Drehmoment und Drehwinkel des Elektromotors 21, ermittelt werden. In der Bremsensteuerung 40 ist auch ein thermisches Modell 31 der Reibungsbremse 1 hinterlegt, mit dem die Verschiebung des Kontaktpunktes durch Wärmedehnung der Reibungsbremse 1, oder Teilen davon, ermittelt wird. Die hierfür benötigten Messgrößen (die ja auch von der konkreten Implementierung des Modells abhängen), wie beispielsweise bestimmte Temperaturen oder Leistungskennwerte der Reibungsbremse 1, sind in Fig.7 aus Gründen der Übersichtlichkeit nicht dargestellt. Mit der thermischen Verschiebung des Kontaktpunktes kann die Wirkungsmaß-Betätigungsmaß Kennlinie 30 mit der Verschiebung des Betätigungsmaßes BM_{Δ} korrigiert werden, um das korrigierte Betätigungsmaß BMₛₒₗₗ' zu ermitteln, das von einer Steuereinheit 33 zum Betätigen der Reibungsbremse 1 benötigt wird. Mit diesem korrigierten Betätigungsmaß BMₛₒₗₗ' wird das Betätigungsmittel 20 der Andrückeinrichtung 10 angesteuert, um den Bremsbelag 6 zum Erzeugen der gewünschten Bremswirkung gegen die Reibfläche 14 zu pressen. Das thermische Modell 31 könnte auch ein Steifigkeitskorrekturmaß SKM ermitteln, mit dem die Wirkungsmaß-Betätigungsmaß Kennlinie 30 wie oben beschrieben korrigiert werden kann.

In der Bremsensteuerung 40 kann noch eine Korrektureinheit 32 implementiert sein, in der weitere Einflüsse auf die Bremsbetätigung, beispielsweise die Wirkung einer Feder 15, die Wirkung von Selbstverstärkung, der Einfluss der kinetischen Energie der Andrückeinrichtung 10 und/oder des Betätigungsmittels 20, die kinetische Energie zum Überwinden des Luftspaltes 13 (gegebenenfalls unter Berücksichtigung der aktuellen Wärmedehnung der Reibungsbremse 1), eine oftmalige Abweichung von der hinterlegten Wirkungsmaß-Betätigungsmaß Kennlinie 30 berücksichtigt werden können. Die Korrektureinheit 32 kann dazu ein Korrekturmaß KM ermitteln, mit dem Einfluss auf die Wirkungsmaß-Betätigungsmaß Kennlinie 30 und/oder auf die Ermittlung der tatsächlichen Wirkungsmaßes WMᵢₛₜ am Ende des Bremsvorganges genommen werden kann, wie oben im Detail ausgeführt. Ebenso kann die Korrektureinheit 32 wie beschrieben Kalibrierfaktoren KF oder Korrekturfaktoren KOF ermitteln.

Die Steuereinheit 33 der Bremsensteuerung 40, oder auch eine separate Einheit in der Bremsensteuerung 40, kann nach dem Bremsvorgang auch dafür sorgen, dass der Luftspalt 13 wieder auf einen gewünschten Wert eingestellt wird. Hierfür steuert die Steuereinheit 33 das Betätigungsmittel 20 der Andrückeinrichtung 10 und/oder einen Verschleißnachsteller 11 an, um beispielsweise auf das Betätigungsmaß BM₀ zurückzustellen. Im Fall einer zu großen Abweichung zwischen dem gewünschten Wirkungsmaß WMₛₒₗₗ und dem tatsächlich ermittelten Wirkungsmaß WMᵢₛₜ am Ende der Bremsung kann auch ein Nachstellmaß NM ermittelt werden, um den Verschleißnachsteller 11 und/oder das Betätigungsmittel 20 der Andrückeinrichtung 10 zu betätigen.

## Patentansprüche

1. Verfahren zum Betätigen einer Reibungsbremse (1), wobei für einen Bremsvorgang ein an einer Andrückeinrichtung (10) der Reibungsbremse (1) angeordneter Bremsbelag (3, 6) gegen eine Reibfläche (14) der Reibungsbremse (1) gepresst wird und die Andrückeinrichtung (10) für den Bremsvorgang von einem Betätigungsmittel (20) der Reibungsbremse (1) angetriebenen wird, wobei für einen Bremsvorgang zur Erzielung eines vorgegebenen Wirkungsmaßes (WMₛₒₗₗ) der Reibungsbremse (1), wobei das Wirkungsmaß (WM) ein Maß für die Bremswirkung ist, der Bremsbelag (3, 6) der Reibungsbremse (1) aus einer Anfangsposition unter Überwindung eines Luftspalts (13) zur Reibfläche (14) der Reibungsbremse (1) zugestellt wird und der Bremsbelag (3, 6) ab einem Kontaktpunkt zwischen Bremsbelag (3, 6) und Reibfläche (14) gegen die Reibfläche (14) gepresst wird, indem ein zum vorgegebenen Wirkungsmaß (WMₛₒₗₗ) zugehöriges Betätigungsmaß (BMₛₒₗₗ) der Reibungsbremse (1) ermittelt und über die Andrückeinrichtung (10) und das Betätigungsmittel (20) eingestellt wird, **dadurch gekennzeichnet, dass** anhand eines thermischen Modells (31) der Reibungsbremse (1) die thermische Ausdehnung der Reibungsbremse (1) ermittelt wird und daraus die temperaturabhängige Verschiebung des Kontaktpunktes für den Bremsvorgang ermittelt wird **und dass** die temperaturabhängige Verschiebung des Kontaktpunktes bei der Ermittlung des einzustellenden Betätigungsmaßes (BMₛₒₗₗ) der Reibungsbremse (1) berücksichtigt wird.

2. Verfahren nach Anspruch 1, **dadurch gekennzeichnet, dass** das einzustellende Betätigungsmaß (BMₛₒₗₗ) in Abhängigkeit von der Verschiebung des Kontaktpunktes erhöht oder erniedrigt wird.

3. Verfahren nach Anspruch 1 oder 2, **dadurch gekennzeichnet, dass** das Wirkungsmaß (WMᵢₛₜ) am Ende des Bremsvorganges ermittelt wird und für die Ermittlung des Wirkungsmaßes (WMᵢₛₜ) die aufgewendete kinetische Energie der Andrückeinrichtung (10) und/oder des Betätigungsmittels (20), oder Teilen davon, für den Bremsvorgang und/oder zur Überwindung des Luftspalts (13) zumindest teilweise berücksichtigt wird.

4. Verfahren nach Anspruch 3, **dadurch gekennzeichnet, dass** die temperaturabhängige Verschiebung des Kontaktpunktes bei der Ermittlung der zur Überwindung des Luftspalts (13) benötigten kinetischen Energie berücksichtigt wird.

5. Verfahren nach einem der Ansprüche 1 bis 4, **dadurch gekennzeichnet, dass** während des Bremsvorganges zumindest zeitweise eine Feder (15) auf die Andrückeinrichtung (10) und/oder das Betätigungsmittel (20) wirkt und die Wirkung der Feder (15) bei der Ermittlung des Wirkungsmaßes (WMᵢₛₜ) berücksichtigt wird.

6. Verfahren nach einem der Ansprüche 1 bis 5, **dadurch gekennzeichnet, dass** während des Bremsvorganges zumindest Selbstverstärkung der Reibungsbremse (1) wirkt und die Wirkung der Selbstverstärkung bei der Ermittlung des Wirkungsmaßes (WMᵢₛₜ) berücksichtigt wird.

7. Verfahren nach einem der Ansprüche 1 bis 6, **dadurch gekennzeichnet, dass** ein ermitteltes Wirkungsmaß (WMᵢₛₜ) und/oder ein eingestelltes Betätigungsmaß (BMᵢₛₜ) mit einem vorgegebenen Korrekturfaktor (KF) korrigiert wird.

8. Verfahren nach einem der Ansprüche 1 bis 7, **dadurch gekennzeichnet, dass** am Ende des Bremsvorganges eine verbleibende Abweichung zwischen dem vorgegebenen Wirkungsmaß (WMₛₒₗₗ) und dem ermittelten Wirkungsmaß (WMᵢₛₜ) am Ende des Bremsvorganges ausgeglichen wird.

9. Verfahren nach Anspruch 8, **dadurch gekennzeichnet, dass** die Abweichung durch Betätigen der Andrückeinrichtung (10) und/oder des Betätigungsmittels (20) ausgeglichen wird oder die Abweichung durch Betätigen eines Verschleißnachstellers (11), an dem die Andrückeinrichtung (10) angeordnet ist, ausgeglichen wird.

10. Verfahren nach einem der Ansprüche 1 bis 9, **dadurch gekennzeichnet, dass** mit dem thermischen Modell (31) die sich aufgrund geänderter Temperaturen ändernde Steifigkeit der Reibungsbremse (1), oder Teilen davon, ermittelt wird und die sich ändernde Steifigkeit bei der Betätigung der Reibungsbremse (1) berücksichtigt wird.

11. Verfahren nach einem der Ansprüche 1 bis 10, **dadurch gekennzeichnet, dass** nach der Bremsung der Luftspalt (13) nachgestellt wird, wenn die Abweichung zwischen dem gewünschten Wirkungsmaß (WMₛₒₗₗ) und dem tatsächlich ermittelten Wirkungsmaß (WMᵢₛₜ) einen vorgegebenen Schwellwert (WMs) überschreitet.

12. Verfahren nach Anspruch 11, **dadurch gekennzeichnet, dass** aus der Abweichung ein Nachstellmaß (NM) abgeleitet wird, mit dem der Luftspalt (13) mit einem Verschleißnachsteller (11) und/oder der Andrückeinrichtung (10) nachgestellt wird.

13. Bremsensteuerung zum Betätigen einer Reibungsbremse (1), wobei für einen Bremsvorgang eine Andrückeinrichtung (10) der Reibungsbremse (1) einen Bremsbelag (3, 6) gegen eine Reibfläche der Reibungsbremse (1) presst und ein Betätigungsmittel (20) vorgesehen ist, das die Andrückeinrichtung (10) antreibt, wobei die Andrückeinrichtung (10) den Bremsbelag (3, 6) für einen Bremsvorgang zur Erzielung eines vorgegebenen Wirkungsma-ßes (WMₛₒₗₗ) der Reibungsbremse (1), wobei das Wirkungsmaß (WM) ein Maß für die Bremswirkung ist, aus einer Anfangsposition unter Überwindung eines Luftspalts (13) zur Reibfläche (14) der Reibungsbremse (1) zustellt und den Bremsbelag (3, 6) ab einem Kontaktpunkt zwischen Bremsbelag (3, 6) und Reibfläche (14) gegen die Reibfläche (14) presst, indem die Bremsensteuerung (40) ein zum vorgegebenen Wirkungsmaß (WMₛₒₗₗ) zugehöriges Betätigungsmaß (BMₛₒₗₗ) der Reibungsbremse (1) ermittelt und das Betätigungsmittel (20) zum Einstellen des Betätigungsmaßes (BMₛₒₗₗ) ansteuert, **dadurch gekennzeichnet, dass** in der Bremsensteuerung (40) ein thermisches Modell (31) der Reibungsbremse (1) hinterlegt ist, um die thermische Ausdehnung der Reibungsbremse (1) und daraus die temperaturabhängige Verschiebung des Kontaktpunktes für den Bremsvorgang zu ermitteln **und dass** die Bremsensteuerung (40) die temperaturabhängige Verschiebung des Kontaktpunktes bei der Ermittlung des einzustellenden Betätigungsmaßes (BMₛₒₗₗ) der Reibungsbremse (1) berücksichtigt.

14. Bremsensteuerung nach Anspruch 13, **dadurch gekennzeichnet, dass** die Bremsensteuerung (40) das Wirkungsmaß (WMᵢₛₜ) am Ende des Bremsvorganges ermittelt und durch Betätigen der Andrückeinrichtung (10) und/oder des Betätigungsmittels (20) eine verbleibende Abweichung zwischen dem vorgegebenen Wirkungsmaß (WMₛₒₗₗ) und dem ermittelten Wirkungsmaß (WMᵢₛₜ) am Ende des Bremsvorganges ausgleicht.

15. Bremsensteuerung nach Anspruch 14, **dadurch gekennzeichnet, dass** die Bremsensteuerung (40) für die Ermittlung des Wirkungsmaßes (WMᵢₛₜ) die für den Bremsvorgang und/oder die für die Überwindung des Luftspaltes (13) aufgewendete kinetische Energie der Andrückeinrichtung (10) und/oder des Betätigungsmittels (20), oder Teilen davon, zumindest teilweise berücksichtigt.

## Claims

1. Method for actuating a friction brake (1), wherein, for a braking operation, a brake pad (3, 6) arranged on a pressing device (10) of the friction brake (1) is pressed against a friction surface (14) of the friction brake (1) and the pressing device (10) for the braking operation is driven by an actuating device (20) of the friction brake (1), wherein for a braking operation to achieve a predetermined effect measure (WMₛₒₗₗ) of the friction brake (1), whereas the effect measure (WM) being a measure of the braking effect, the brake pad (3, 6) of the friction brake (1) is moved from an initial position while overcoming an air gap (13) to the friction surface (14) of the friction brake (1) and the brake pad (3, 6) is pressed against the friction surface (14) starting from a contact point between the brake pad (3, 6) and the friction surface (14), in that an actuation measure (BMₛₒₗₗ) of the friction brake (1) corresponding to the predetermined effect measure (WMₛₒₗₗ) is determined and set by means of the pressing device (10) and the actuating device (20), **characterized in that** the thermal expansion of the friction brake (1) is determined using a thermal model (31) of the friction brake (1) and therefrom the temperature-dependent shift in the contact point is determined for the braking operation **and that** the temperature-dependent shift in the contact point is taken into account when determining the actuation measure (BMₛₒₗₗ) of the friction brake (1) to be adjusted.

2. Method according to claim 1, **characterized in that** the actuation measure to be set (BMₛₒₗₗ) is increased or decreased depending on the shift of the contact point.

3. Method according to claim 1 or 2, **characterized in that** the effect measure (WMᵢₛₜ) is determined at the end of the braking operation and, for the determination of the effect measure (WMᵢₛₜ), the kinetic energy of the pressing device (10) and/or the actuating device (20), or parts thereof, is at least partially taken into account for the braking operation and/or for overcoming the air gap (13).

4. Method according to claim 3, **characterized in that** the kinetic energy of the pressing device (10) and/or of the actuating device (20), or parts thereof, required to overcome the air gap (13) is taken into account when determining the effect measure (WMᵢₛₜ).

5. Method according to any of claims 1 to 4, **characterized in that,** during the braking operation, a spring (15) acts at least temporarily on the pressing device (10) and/or the actuating device (20) and the effect of the spring (15) is taken into account when determining the effect measure (WMᵢₛₜ).

6. Method according to any of claims 1 to 5, **characterized in that** self-reinforcement of the friction brake (1) acts at least temporarily during the braking operation and the effect of the self-reinforcement is taken into account when determining the effect measure (WMᵢₛₜ).

7. Method according to any of claims 1 to 6, **characterized in that** a determined effect measure (WMᵢₛₜ) and/or an adjusted actuation measure (BMᵢₛₜ) is corrected with a predetermined correction factor (KF).

8. Method according to any of claims 1 to 7, **characterized in that** at the end of the braking operation a remaining deviation between the predetermined effect measure (WMₛₒₗₗ) and the effect measure (WMᵢₛₜ) determined at the end of the braking operation is compensated for.

9. Method according to claim 8, **characterized in that** the deviation is compensated for by actuating the pressing device (10) and/or the actuating device (20) or the deviation is compensated for by actuating a wear adjuster (11) on which the pressing device (10) is arranged.

10. Method according to any of claims 1 to 9, **characterized in that,** using the thermal model (31), the stiffness of the friction brake (1), or parts thereof, which changes due to changed temperatures, is determined and the changing stiffness is taken into account when actuating the friction brake (1).

11. Method according to any of claims 1 to 10, **characterized in that** after braking, the air gap (13) is adjusted if the deviation between the predetermined effect measure (WMₛₒₗₗ) and the actually determined effect measure (WMᵢₛₜ) exceeds a predetermined threshold value (WMs).

12. Method according to claim 11, **characterized in that** an adjustment measure (NM) is derived from the deviation, with which the air gap (13) is adjusted using a wear adjuster (11) and/or the pressing device (10).

13. Brake control for actuating a friction brake (1), wherein a pressing device (10) of the friction brake (1) presses a brake pad (3, 6) against a friction surface of the friction brake (1) for a braking operation and an actuating device (20) is provided which drives the pressing device (10), wherein the pressing device (10) moves the brake pad (3, 6) for a braking operation in order to achieve a predetermined effect measure (WMₛₒₗₗ) of the friction brake (1), whereas the effect measure (WM) being a measure of the braking effect, from an initial position while overcoming an air gap (13) to the friction surface (14) of the friction brake (1) and presses the brake pad (3, 6) starting from a contact point between the brake pad (3, 6) and the friction surface (14) against the friction surface (14), in that the brake control (40) determines an actuation measure (BMₛₒₗₗ) of the friction brake (1) which is associated with the predetermined effect measure (WMₛₒₗₗ) and controls the actuating means (20) to set the actuation measure (BMₛₒₗₗ), **characterized in that** a thermal model (31) of the friction brake (1) is stored in the brake control (40) in order to determine the thermal expansion of the friction brake (1) and therefrom the temperature-dependent shift of the contact point for the braking operation **and in that** the brake control (40) takes into account the temperature-dependent shift of the contact point when determining the actuation measure (BMₛₒₗₗ) of the friction brake (1) to be set.

14. Brake control according to claim 13, **characterized in that** the brake control (40) determines the effect measure (WMᵢₛₜ) at the end of the braking operation and compensates for a remaining deviation between the predetermined effect measure (WMₛₒₗₗ) and the determined effect measure (WMᵢₛₜ) at the end of the braking operation by actuating the pressing device (10) and/or the actuating device (20).

15. Brake control according to claim 14, **characterized in that** the brake control (40) at least partially takes into consideration the kinetic energy of the pressing device (10) and/or the actuating device (20), or parts thereof, used for the braking operation and/or for overcoming the air gap (13), for determining the effect measure (WMᵢₛₜ).

## Revendications

1. Procédé pour l'actionnement d'un frein à friction (1), pour un freinage une garniture de frein (3, 6) disposée sur un dispositif de pression (10) du frein à friction (1) étant pressée contre une surface de frottement (14) du frein à friction (1) et le dispositif de pression (10) étant entraîné pour le freinage par un moyen d'actionnement (20) du frein à friction (1), pour l'obtention, pour un freinage, d'un niveau d'effet prédéfini (WMₛₒₗₗ) du frein à friction (1), le niveau d'effet (VVM) étant une mesure pour l'effet de freinage, la garniture de frein (3, 6) du frein à friction (1) étant amenée d'une position initiale avec franchissement d'un entrefer (13) vers la surface de frottement (14) du frein à friction (1) et la garniture de frein (3, 6) étant pressée contre la surface de frottement (14) à partir d'un point de contact entre la garniture de frein (3, 6) et la surface de frottement (14), un niveau d'actionnement (BMₛₒₗₗ) du frein à friction (1) correspondant au niveau d'effet (WMₛₒₗₗ) prédéfini étant déterminé et réglé au moyen du dispositif de pression (10) et du moyen d'actionnement (20), **caractérisé en ce que**, au moyen d'un modèle thermique (31) du frein à friction (1), la dilatation thermique du frein à friction (1) est déterminée et, à partir de celle-ci, le déplacement dépendant de la température du point de contact pour le freinage est déterminé, **et en ce que** le déplacement dépendant de la température du point de contact est pris en compte lors de la détermination du niveau d'actionnement (BMₛₒₗₗ) du frein à friction (1) devant être réglé.

2. Procédé selon la revendication 1, **caractérisé en ce que** le niveau d'actionnement (BMₛₒₗₗ) à régler est augmenté ou réduit en fonction du déplacement du point de contact.

3. Procédé selon la revendication 1 ou 2, **caractérisé en ce que** le niveau d'effet (WMᵢₛₜ) est déterminé à la fin du freinage et, pour la détermination du niveau d'effet (WMᵢₛₜ), l'énergie cinétique utilisée du dispositif de pression (10) et/ou du moyen d'actionnement (20), ou des parties de celle-ci, est prise en compte au moins partiellement pour le freinage et/ou pour le franchissement de l'entrefer (13).

4. Procédé selon la revendication 3, **caractérisé en ce que** le déplacement dépendant de la température du point de contact est pris en compte lors de la détermination de l'énergie cinétique nécessaire pour le franchissement de l'entrefer (13).

5. Procédé selon l'une quelconque des revendications 1 à 4, **caractérisé en ce que**, durant le freinage, un ressort (15) agit au moins temporairement sur le dispositif de pression (10) et/ou sur le moyen d'actionnement (20) et l'effet du ressort (15) est pris en compte lors de la détermination du niveau d'effet (WMᵢₛₜ).

6. Procédé selon l'une quelconque des revendications 1 à 5, **caractérisé en ce que**, durant le freinage, l'auto-amplification du frein à friction (1) agit et l'effet de l'auto-amplification est pris en compte lors de la détermination du niveau d'effet (WMᵢₛₜ).

7. Procédé selon l'une quelconque des revendications 1 à 6, **caractérisé en ce qu'**un niveau d'effet (WMᵢₛₜ) déterminé et/ou un niveau d'actionnement (BMᵢₛₜ) réglé sont corrigés par un facteur de correction (KF) prédéfini.

8. Procédé selon l'une quelconque des revendications 1 à 7, **caractérisé en ce que**, à la fin du freinage, un écart restant entre le niveau d'effet (WMₛₒₗₗ) prédéfini et le niveau d'effet (WMᵢₛₜ) déterminé est compensé à la fin du freinage.

9. Procédé selon la revendication 8, **caractérisé en ce que** l'écart est compensé par l'actionnement du dispositif de pression (10) et/ou du moyen d'actionnement (20) ou l'écart est compensé par l'actionnement d'un dispositif d'ajustage d'usure (11), au niveau duquel est disposé le dispositif de pression (10).

10. Procédé selon l'une quelconque des revendications 1 à 9, **caractérisé en ce que**, au moyen du modèle thermique (31), la rigidité du frein à friction (1) changeante en raison de changements de température, ou des parties de celle-ci, est déterminée et la rigidité changeante est prise en compte lors de l'actionnement du frein à friction (1).

11. Procédé selon l'une quelconque des revendications 1 à 10, **caractérisé en ce que**, après le freinage, l'entrefer (13) est réajusté si l'écart entre le niveau d'effet (WMₛₒₗₗ) souhaité et le niveau d'effet (WMᵢₛₜ) effectivement déterminé dépasse une valeur de seuil (WMs) prédéfinie.

12. Procédé selon la revendication 11, **caractérisé en ce qu'**une mesure de réajustage (NM) est dérivée à partir de l'écart, avec laquelle l'entrefer (13) est réajusté au moyen d'un dispositif d'ajustage d'usure (11) et/ou du dispositif de pression (10).

13. Commande de frein pour l'actionnement d'un frein à friction (1), pour un freinage un dispositif de pression (10) du frein à friction (1) pressant une garniture de frein (3, 6) contre une surface de frottement du frein à friction (1) et un moyen d'actionnement (20) étant prévu, lequel entraîne le dispositif de pression (10), le dispositif de pression (10) amenant, pour l'obtention, pour un freinage, d'un niveau d'effet prédéfini (WMₛₒₗₗ) du frein à friction (1), le niveau d'effet (VVM) étant une mesure pour l'effet de freinage, la garniture de frein (3, 6) d'une position initiale avec franchissement d'un entrefer (13) vers la surface de frottement (14) du frein à friction (1) et pressant la garniture de frein (3, 6) contre la surface de frottement (14) à partir d'un point de contact entre la garniture de frein (3, 6) et la surface de frottement (14), la commande de frein (40) déterminant un niveau d'actionnement (BMₛₒₗₗ) du frein à friction (1) correspondant au niveau d'effet (WMₛₒₗₗ) prédéfini et commandant le moyen d'actionnement (20) pour le réglage du niveau d'actionnement (BMₛₒₗₗ), **caractérisée en ce qu'**un modèle thermique (31) du frein à friction (1) est déposé dans la commande de frein (40), pour déterminer la dilatation thermique du frein à friction (1) et, à partir de celle-ci, le déplacement dépendant de la température du point de contact pour le freinage, **et en ce que** la commande de frein (40) prend en compte le déplacement dépendant de la température du point de contact lors de la détermination du niveau d'actionnement (BMₛₒₗₗ) du frein à friction (1) devant être réglé.

14. Commande de frein selon la revendication 13, **caractérisée en ce que** la commande de frein (40) détermine le niveau d'effet (WMᵢₛₜ) à la fin du freinage et compense par l'actionnement du dispositif de pression (10) et/ou du moyen d'actionnement (20) un écart restant entre le niveau d'effet (WMₛₒₗₗ) prédéfini et le niveau d'effet (WMᵢₛₜ) déterminé à la fin du freinage.

15. Commande de frein selon la revendication 14, **caractérisée en ce que** la commande de frein (40) prend en compte au moins partiellement, pour a détermination du niveau d'effet (WMᵢₛₜ), l'énergie cinétique du dispositif de pression (10) et/ou du moyen d'actionnement (20) utilisée pour le freinage et/ou le franchissement de l'entrefer (13), ou des parties de celle-ci.
